# EUROPEAN PATENT APPLICATION

(11) **EP 2 461 258 A2**
(43) Date of publication of application: **06.06.2012**
(21) Application number: 11171134.7
(22) Date of filing: 23.06.2011
(51) Int. Cl.: G06F 17/30, H04N 5/445, H04N 7/173

(54) **Display apparatus and contents searching method**

(30) Priority: 02.12.2010 KR 20100122316
(71) Applicant: Samsung Electronics Co., Ltd., Suwon-si Gyeonggi-do 442-742 (KR)
(72) Inventor: Han, Kum-yon, Suwon-si, Gyeonggi-do (KR); Kim, Eun-seok, Yongin-si, Gyeonggi-do (KR)
(74) Representative: Brandon, Paul Laurence

(57) **Abstract**

A display apparatus includes a display unit which displays contents; and a integrated searching unit which displays a recommended search word related to current contents displayed on the display unit if a user inputs a search signal for executing a searching function, and displays contents related to a selected recommended search word if a user selects one of the recommended search words.

## Description

### 1. Field

Apparatuses and methods consistent with the exemplary embodiments relate to a display apparatus and a contents-searching method, and more particularly, to a display apparatus capable of receiving contents through Internet and a contents-searching method.

### 2. Description of the Related Art

With development of technology, there have been introduced multi-functional electronic products improved in convenience and functionality by integrating various functions into one electronic product. In particular, development of a network infrastructure and Internet informatization have led to technology which adds an Internet function to the electronic product.

Among the multi-functional electronic products, a television (TV) may integrate an Internet access function thereinto to be connected to the Internet. Also, a TV may be capable of accessing the Internet through a relay such as a set-top box or the like. Particularly, an Internet TV service has recently been in the limelight so that the TV can access Internet and provide an audiovisual material from Internet. Thus, the Internet TV service allows a user to enjoy multimedia contents stored in a server of an Internet TV provider through the TV.

Thus, a user can receive more various multimedia contents through the TV supporting Internet.

Accordingly, there is a need of finding a method that allows a user to easily and conveniently search a lot of contents on Internet or contents acquirable by the TV through a route except Internet access.

### SUMMARY

An aspect of one or more exemplary embodiments provides a display apparatus and a contents-searching method, which can provide a recommended search word related to contents being displayed,

An aspect of another exemplary embodiment provides a display apparatus and a contents-searching method, in which contents can be easily searched through a plurality of application units capable of providing contents.

An aspect of another exemplary embodiment provides a display apparatus and a contents-searching method, in which contents can be easily searched with regard to application units providing no searching function.

An aspect of an exemplary embodiment provides a display apparatus including a display unit which displays contents; and a integrated searching unit which displays a recommended search word related to contents displayed on the display unit if a user inputs a search signal for executing a searching function, and displays contents related to a selected recommended search word if a user selects one of the recommended search words.

The display apparatus may further include a plurality of application units, wherein the integrated searching unit controls the plurality of application units to search contents related to the recommended search word.

The display apparatus may further include a communication unit which communicates with an external server, wherein the integrated searching unit extracts a basic search word on the basis of metadata of contents displayed on the display unit when receiving the search signal, transmits the extracted basic search word to the server, and receives and displays the recommended search word related to the basis search word from the server.

The display apparatus may further include a broadcasting receiver which receives a broadcasting signal, wherein the integrated searching unit receives and displays program ranking information about a broadcasting signal from the server if the display unit displays a broadcasting signal.

The integrated searching unit may receive and display contents ranking information about the application unit providing contents displayed on the display unit from the server.

The display apparatus may further include a broadcasting receiver which receives a broadcasting signal, wherein the integrated searching unit receives and displays program ranking information and contents ranking information about the application unit from the server.

The integrated searching unit may display a search list about the searched contents on the display unit.

The integrated searching unit may control the application unit to execute selected contents if contents included in the search list is selected.

The display apparatus may further include a broadcasting receiver which receives a broadcasting signal, wherein the application unit includes an electronic program guide (EPG) execution unit which displays broadcasting information based on the broadcasting signal.

The application unit may receive contents from a predetermined contents provider based on Internet.

The display apparatus may further include a communication unit which performs network communication with an external device, wherein the application unit searches contents involved in the external device through the communication unit.

An aspect of another exemplary embodiment provides a method of searching contents of a display apparatus including a plurality of application units and a display unit, the method including: receiving a search signal for executing a searching function from a user; displaying a recommended search word, related to contents displayed on the display unit, on the display unit; receiving a search word selection signal for selecting one among the recommended search words from a user; and displaying contents related to the selected recommended search word.

The method may further include searching contents related to the recommended search word selected by controlling the plurality of applications unit.

The method may further include: extracting a basic search word on the basis of metadata of contents displayed on the display unit when receiving the search signal; transmitting the extracted basic search word to an external server; and receiving the recommended search word related to the basic search word from the server.

The display apparatus may further include a broadcasting receiver for receiving a broadcasting signal, and the method may further include receiving program ranking information about the broadcasting signal and contents ranking information about the application unit from the server; and displaying information related to contents displayed on the display unit between the program ranking information and the contents ranking information.

The displaying the searched contents may include displaying a search list with regard to the searched contents.

The method may further include executing selected contents if contents included in the search list is selected.

### BRIEF DESCRIPTION OF THE DRAWINGS

The above and/or other aspects will become apparent and more readily appreciated from the following description of the exemplary embodiments, taken in conjunction with the accompanying drawings, in which:

FIG. 1 is a control block diagram of a display apparatus according to an exemplary embodiment;

FIG. 2 shows a recommended search word displayed on the display apparatus according to an exemplary embodiment;

FIG. 3 shows a integrated search result displayed on the display apparatus according to an exemplary embodiment;

FIG. 4 shows a contents-executing result in the integrated search result of FIG. 3;

FIG. 5 is a control flowchart for explaining a contents-searching method of the display apparatus according to an exemplary embodiment;

FIG. 6 is a schematic view of a display apparatus according to another exemplary embodiment; and

FIG. 7 is a control block diagram of a display apparatus according to still another exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout. Expressions such as "at least one," when preceding a list of elements, modify the entire list and not the individual elements of the list.

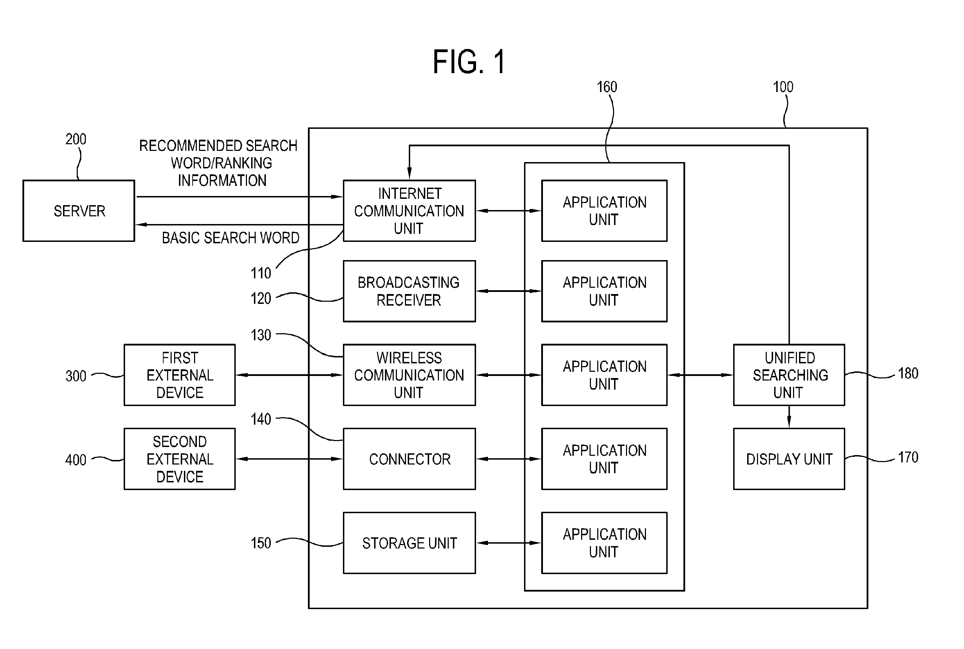

FIG. 1 is a control block diagram of a display apparatus according to an exemplary embodiment.

As shown therein, a display apparatus 100 in this exemplary embodiment includes an Internet communication unit 110, a broadcasting receiver 120, a wireless communication unit 130, a connector 140, a storage unit 150, a plurality of application units 160, a display unit 170 and a integrated searching unit 180. The display apparatus 100 may be achieved by an Internet TV or a smart TV which can receive various services through an Internet protocol, or may be achieved, for example, by a personal computer, a mobile phone, a smart phone, a portable multimedia player (PMP), a Netbook, a notebook computer, an E-book device, or the like personal terminal. The display apparatus 100 receives contents from various contents providers through Internet access and displays it, which includes any device for executing the contents. Also, an application for executing and displaying the contents may be installed in the display apparatus 100 and executed. Contents according to this exemplary embodiment may include any information, which can be displayed, played and achieved in the display apparatus 100, such as, for example, a broadcasting signal, a text, a photograph, a still image, a moving picture, a movie, a music, etc.

The Internet communication unit 110 includes a communication module which can perform wired/wireless access to Internet. The Internet communication unit 110 communicates with various contents providers to receive contents such as, for example, a music file, a still image, a text, a moving picture, etc., and to transmit various control signals to the contents provider. Also, the Internet communication unit 110 in this exemplary embodiment transmits a basic search word to a server 200 under control of the integrated searching unit 180, and receives a recommended search word from the server 200 to thereby provide it to the integrated searching unit 180.

The server 200 includes an Internet-based contents provider which can provide various contents and recommended search word to the Internet communication unit 110 of the display apparatus 100. The server 200 may include a plurality of contents providers, but is illustrated as a single unit in FIG. 1 for convenience. The server 200 searches a recommended search word related to the received basic search word, and transmits the searched recommended search word to the display apparatus 100.

The broadcasting receiver 120 includes an antenna, a tuner, etc. to receive and process a broadcasting signal from a broadcasting station. The broadcasting signal may be based on skywave broadcasting, cable broadcasting, satellite broadcasting, etc. Also, the broadcasting receiver 120 may be achieved by a cable connector capable of receiving a broadcasting signal from a cable broadcasting station. The broadcasting signal may contain an audio signal, a video signal, and a data signal, and may include electronic program guide (EPG) information about a broadcasting program. The EPG information may include channel information about the broadcasting signal, program information according to channels, program time information, etc.

The wireless communication unit 130 communicates with the first external device 300 located remotely from the display apparatus 100 through a wireless network. The wireless communication unit 130 may include a communication module corresponding to various communication methods such as Bluetooth®, WiFi™, zigbee, infrared (IR) communication, radio frequency (RF) communication, and other wired communications.

Meanwhile, middleware which supports a home networking to share digital contents such as, for example, music, photos, and videos stored in electronic devices such as home computers, home appliances, and portable terminals, includes universal plug and play (UPnP), home audio video interoperability (HaVi), Jini, video electronics standards association (VESA), digital living network alliance (DLNA), etc.. According to an exemplary embodiment, the wireless communication unit 130 may communicate with the first external device 300 based on already established public standards, e.g., the DLNA established on the basis of hypertext transfer protocol (HTTP), UPnP, WiFi, or industry standards. The DLNA is focused on sharing all contents provided from a television (TV), a video cassette recorder (VCR), a digital camera, an audio system, or the like devices, and supports a mobile device, a personal computer (PC) or the like personal device to acquire, transmit and manage a lot of digital media contents (e.g., photographs, music, video, etc.). The wireless communication unit 130 and the first external device 300 may transmit and receive account information about the contents provider through networking based on the DLNA.

The connector 140 acts as an interface to which an external storage unit other than the storage unit 150 involved inside the display apparatus 100 can be connected. The connector 140 may include a connecting port to which a second external device 400 including a mobile storage medium such as a universal serial bus (USB) memory can be directly connected, and may include a wired network connector to which the second external device 400 including the storage unit is connectable.

The storage unit 150 includes a memory, which is provided inside the display apparatus 100, to store contents such a, for example, s a still image such as a photograph, a moving picture, a music file, a movie, etc. The storage unit 150 may be achieved by a hard disk drive (HDD), a flash memory or the like non-volatile memory, etc., used when executing a personal video recorder (PVR) function.

The application unit 160 includes an application program that is installed in the display apparatus 100 to execute various contents. The application unit 160 searches contents corresponding to or including a recommended search word selected under control of the integrated searching unit 180, and executes the selected contents. The application program may be stored when the display apparatus 100 is manufactured, or downloaded from the content provider through wired or wireless Internet. The application unit 160 may be achieved by an electronic program guide (EPG) execution unit for displaying EPG information involved in a broadcasting signal, an application program capable of receiving contents by accessing a social network service (SNS) site, an application program capable of receiving contents through wired or wireless connection with an external device, an application program capable of searching and executing video based on a video on demand (VOD) service, a browser capable of searching stored contents, etc. Also, a player capable of searching and reproducing various multimedia is included in the application unit 160. The plurality of application units 160 may be displayed as a graphic user interface (GUI) on the display unit 170 in the form of a thumbnail image or an icon.

The application unit 160 may have a searching function for searching contents individually. A user may select the application unit 160 and search contents from a certain contents provider. For example, if the application unit 160 is an application program capable of accessing Twitter as one of the SNS, a user can access the Twitter and search a certain search word, thereby seeing search results. That is, each application unit 160 can have a searching function.

The display unit 170 displays contents received from various contents sources and displays a list of contents searched by the integrated searching unit 180. The display unit 170 may include a liquid crystal display (LCD) panel having a liquid crystal, an organic light emitting diode (OLED) panel having an OLED, or a plasma display panel (PDP), and a driver for driving the panel.

Although it is not shown, the display apparatus 100 may include various signal processors for processing the received contents and displaying it on the displaying unit 170. The signal processor may include a video processing block such as, for example, a decoder, a scaler, an enhancer, etc., and an audio processing block.

The foregoing elements are divided according to function to explain the content sources that can be acquired in the display apparatus 100, but may not be divided physically. The broadcasting receiver 120 and the Internet communication unit 110 may be formed integrally as a single element, and the Internet communication unit 110 and the wireless communication unit 130 may also be formed integrally as a single element.

Also, according to another exemplary embodiment, the display apparatus 100 may be connected to a set-top box which receives a broadcasting and is connected to a video source. In this case, the broadcasting receiver 120, the Internet communication unit 110, the wireless communication unit 130, the connector 140, and the storage unit 150 may be provided in the set-top box. The application unit 160 may search contents in various contents sources connected to the set-top box, and may execute the selected contents.

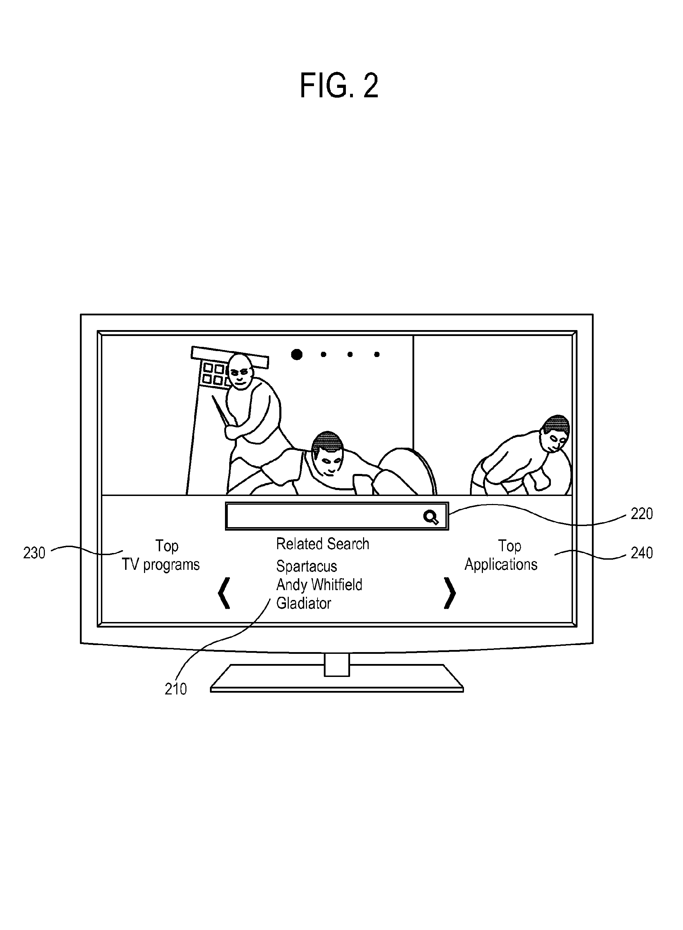

The integrated searching unit 180 displays on the display unit 170 a recommended search word, related to the contents displayed on the display unit 170, if a search signal is received for executing the searching function from a user. FIG. 2 shows a recommended search word ("Related Search") 210 displayed on the display apparatus according to an exemplary embodiment. As shown therein, an input bar 220 for inputting a search word is displayed when the search signal is received from a user, and a recommended search word 210 related to contents currently displayed on the display unit 170 is displayed under the input bar 220. In the case, where the display apparatus 100 is a television, a user input unit typically includes a remote controller having arrow buttons corresponding to up, down, left and right. Recently, such a remote controller has been provided with a touch pad or a touch screen based on a touch. In the case of a touch-based interface, direction control due to touch movement is facilitated. In this user environment, to promote a user's convenience and to take the remote controller inconvenient in a text input into account, the integrated searching unit 180 provides recommended search words expected to be searched by a user. At this time, the recommended search word 210 may be related to the contents currently displayed on the display unit 170. That is, although a user does not input a search word, the display apparatus 100 in this exemplary embodiment provides the recommended search words 210 corresponding to a user's demand when a user inputs a search signal for searching.

To this end, the integrated searching unit 180 extracts a basic search word on the basis of metadata of the contents displayed on the display unit 170, and provides a recommended search word 210 based on the extracted basic search word. For example, if the displayed contents are based on a broadcasting signal received through the broadcasting receiver 120, the integrated searching unit 180 determines information about a currently broadcasted program from the metadata of the broadcasting signal, e.g., uses information about a program title, a program broadcasting time, a broadcasting station, etc. Also, in the case where a user watches a moving picture provided by the VOD service, the integrated searching unit 180 extracts the basic word on the basis of the metadata of the moving picture.

In this exemplary embodiment, the integrated searching unit 180 transmits the extracted basic search word to the server 200, and receives a recommended search word 210 related to the basic search word from the server 200. The server 200 may include a search engine capable of searching various recommended search words related to the basis search word. Also, the server 200 may provide the most real-time search word or the like related to the basic search word as a recommended search word.

Thus, a user can easily select the provided recommended search word through an arrow button or touch movement.

According to another exemplary embodiment, the integrated searching unit 180 may display the basic search word as the recommended search word without additional search. Also, the integrated searching unit 180 includes a search engine so that it can extract a basic search word and search an additional search word based on the basic search word. In this case, the integrated searching unit 180 may include a storage unit to store various information.

The integrated searching unit 180 may receive ranking information about the sources of contents currently executable in the display apparatus 100, e.g., receive and display program ranking information 230 if it can receive a broadcasting signal, ranking information 240 about the application unit 160 if the application unit 160 can execute contents, ranking information about an issue or subject most popular in the corresponding application unit 160, etc. from the server 200. Also, the display apparatus 100 may display the ranking information 240 based on popularity or a user preference, or the latest generated ranking information 240 from the server 200, i.e., information based on time. The ranking information 240 related to the contents currently displayed on the display unit 170 is displayed first, or above, or more prominently than information relating to other contents. For example, if the contents currently displayed on the display unit 170 are a broadcasting signal, ranking about a television program is preferentially displayed at a left side where the recommended search word 210 is displayed, and then ranking information about other contents sources is displayed sequentially in a rightward direction.

A user may select one of the recommended search words 210 through up and down buttons or up and down touch movement, and move between the ranking information 230, 240 and the recommended search word 210 through left and right buttons or left and right touch movement.

The program ranking information 230 or the content ranking information may not be displayed on the display unit 170. That is, such information may be selectively provided to a user.

The recommended search word 210 and the ranking information 230, 240 may be transparently displayed over the displayed contents, or the displayed size thereof may be adjustable. As shown therein, they may be displayed in a lower side of the display unit 170, or displayed in the form of picture-in-picture (PIP).

The integrated searching unit 180 controls the plurality of application units 160 so as to search contents related to the recommended search word selected by a user, and displays the contents searched in the application unit 160 on the display unit 170. Through this, a user can perform the search with respect to all contents displayable or reproducible on the display apparatus 100. If the recommended search word is selected, the integrated searching unit 180 controls each application unit 160 to perform its own searching function. The contents searched in each application unit 160 are provided to a user through the GUI supported by the integrated searching unit 180.

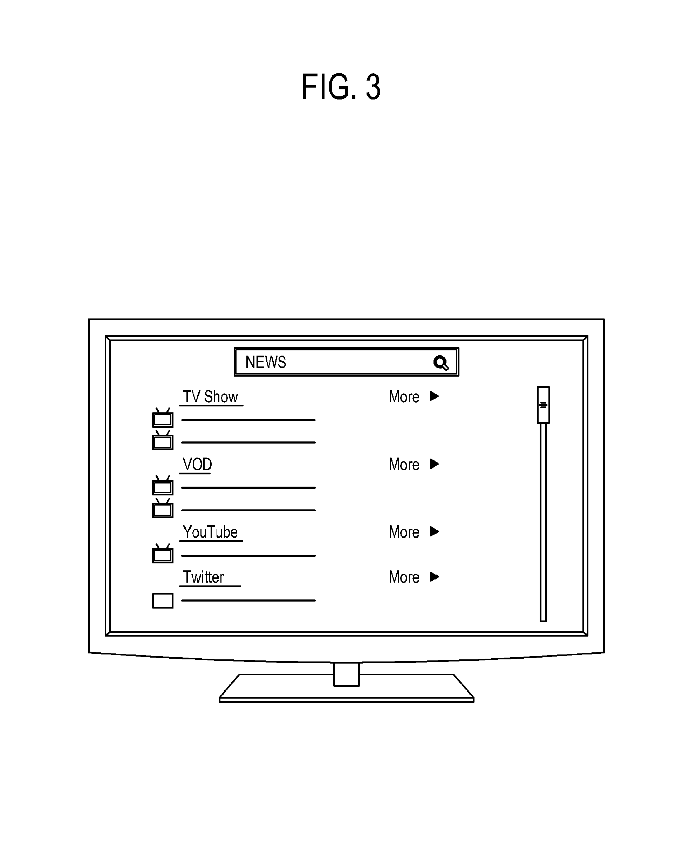

The integrated searching unit 180 in this exemplary embodiment displays a search list of the searched contents on the display unit 170. FIG. 3 shows a integrated search result displayed on the display apparatus according to an exemplary embodiment. As shown therein, a contents-item searched in the EPG information based on the broadcasting signal, a contents-item searched in the VOD service, a contents-item searched in the "YouTube", the item searched in the "Twitter", etc. are listed in a series of vertical lists. Among the search results of the plural application units 160, the search list searched in the application unit 160 which is most related to the application through which the contents currently being viewed by a user may be displayed on the top of the series of lists.

Without executing the plurality of application units 160 to search contents, a user can obtain information about all currently acquirable contents related to the search word through a single input of the search signal. That is, the display apparatus 100 including the plurality of application unit 160 achieves the integrated searching through individual searching functions of the application units 160 under control of the integrated searching unit 180.

For example, if a user inputs a search signal for executing the searching function while currently viewing a first channel, information about the first channel or another channel related to a broadcasting signal received through the first channel may be displayed in the recommended search word 210 or the search list. A user selects the first channel and another channel so that the user can easily and conveniently change the channel. Such a recommended search word and a integrated searching based on the recommended search word allow a user to more conveniently and intuitively search and change the channel.

Of course, a user may obtain the search results from a specific contents source by individually executing the application unit 160.

Although it is not shown, as described above, the display apparatus 100 may further include the remote controller having the arrow buttons, The remote controller may include a touch pad or touch screen based on a touch, or may further includes a keypad such as a 'QWERTY' keypad for a user's text input. Also, the display apparatus 100 may include a keyboard, a mouse, etc. as the user input unit.

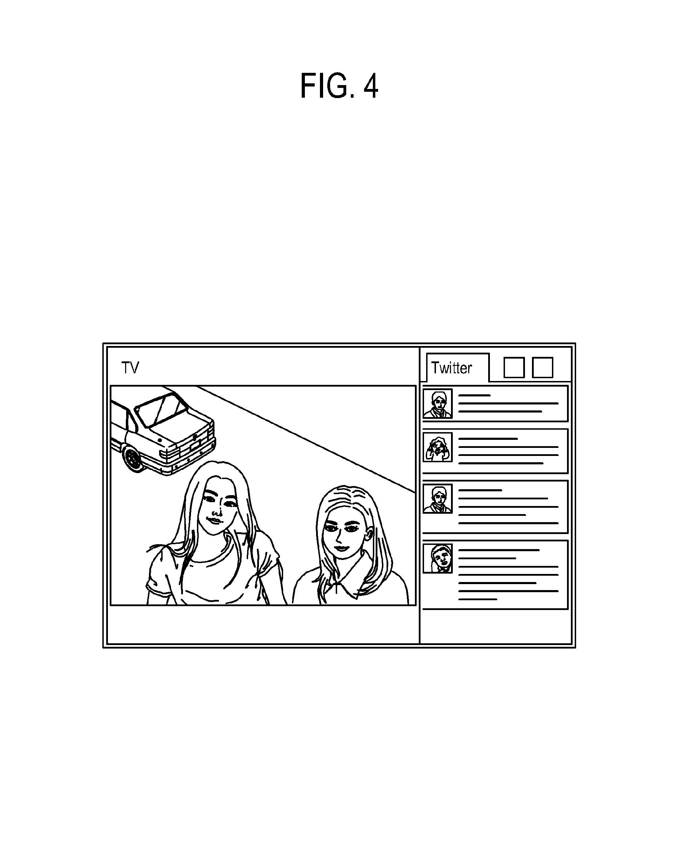

A user may select one among the contents displayed on the search list, and thus the application unit 160 executes the selected contents and displays the selected contents on the display unit 170. FIG. 4 shows a contents-executing result in the integrated search result of FIG. 3. As shown therein, a certain site corresponding to this is displayed together with an image about the contents.

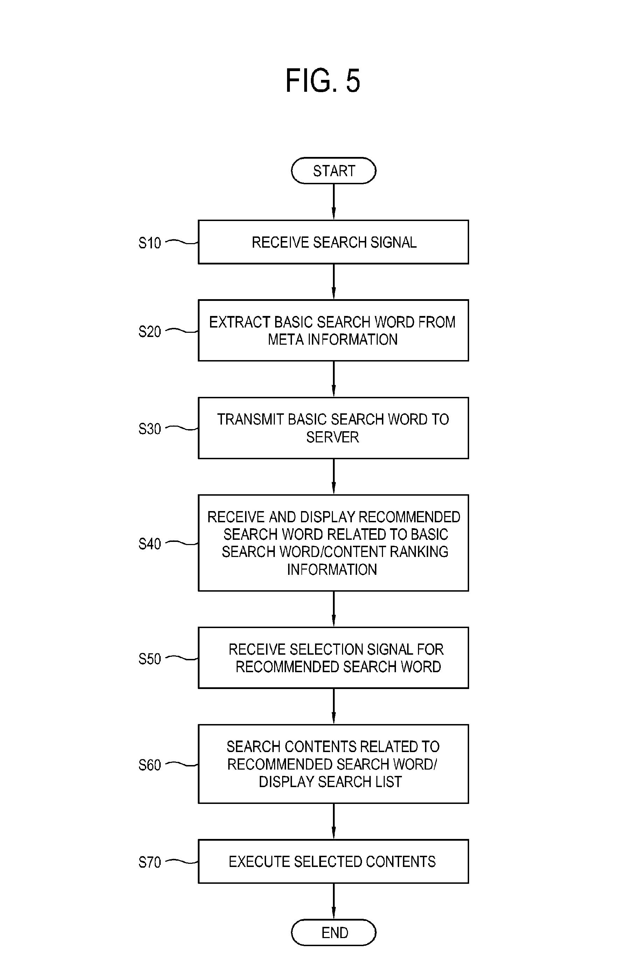

FIG. 5 is a control flowchart for explaining a contents-searching method of the display apparatus according to an exemplary embodiment. Referring to FIG. 5, the contents-searching method in this exemplary embodiment is as follows.

First, a user installs the plurality of application units 160 providing contents.

When a search signal input for the integrated searching is received from a user (S10), the integrated searching unit 180 extracts a basic search word on the basis of meta information of the contents currently displayed on the display unit 170(S20).

The integrated searching unit 180 transmits the extracted basic search word to the server 200, and requests a recommended search word (S30). Also, the integrated searching unit 180 in this exemplary embodiment requests ranking information about executable contents sources to the server 200.

The server 200 drives the search engine and searches the recommended search word related to the basic search word, thereby providing the search results to the display apparatus 100.

The integrated searching unit 180 receives the recommended search word related to the basic search word and the contents ranking information from the server 200, and displays them on the display unit 170 (S40).

If a selection signal for selecting one among the recommended search words is received from a user (S50), the integrated searching unit 180 controls the application unit 160 to search the contents related to the recommended search word, and displays the related contents as the search list (S60). The application unit 160 can search, for example, broadcasting information, search contents that can be provided by the contents provider, and search contents acquirable through network communication such as the DLNA or a USB storage medium. Also, the application unit 160 may search contents stored in the storage unit 150 inside the display apparatus 100.

A user may select desired certain contents in the search list, and the application unit 160 executes the selected contents (S70).

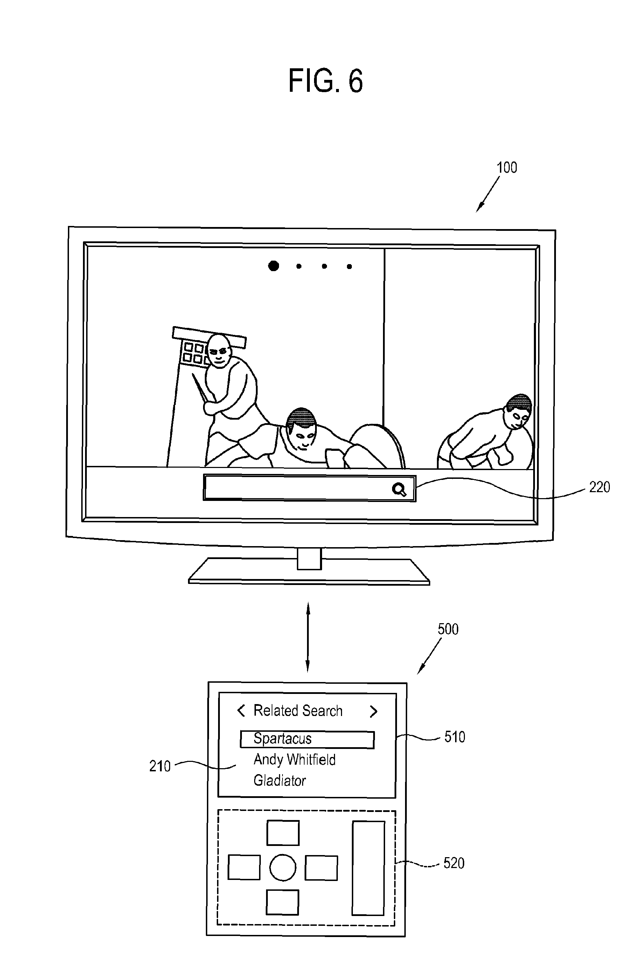

FIG. 6 is a schematic view of a display apparatus according to another exemplary embodiment.

As shown therein, according to an exemplary embodiment, if a user inputs a search signal, the input bar 220 may be displayed on the display unit 170, and the recommended search word 210 may be displayed on an external user input device 500. The user input device 500 may include a sub display unit 510 such as an LCD screen or a touch screen based on a touch. On the sub display unit 510, the recommended search words 210 received from the display apparatus 100 is displayed, so that a user can select one among the recommended search words 210 displayed on the user input device 500. The user input device 500 may further include a plurality of buttons 520 for a user input.

The user input device 500 may be involved in the display apparatus 100 like a typical remote controller, or may be separately provided like a mobile terminal. The user input device 500 communicates with the display apparatus 100, receives information such as the recommended search word 210, and transmits a user's selection signal to the display apparatus 100.

If a user selects one among the recommended search word 210, the search list thereof may be displayed on the display unit 170 or the sub display unit 510. If a specific content is selected in the search list, the selected content is executed and the executing result is also displayed on at least one of the display unit 170 and the sub display unit 510.

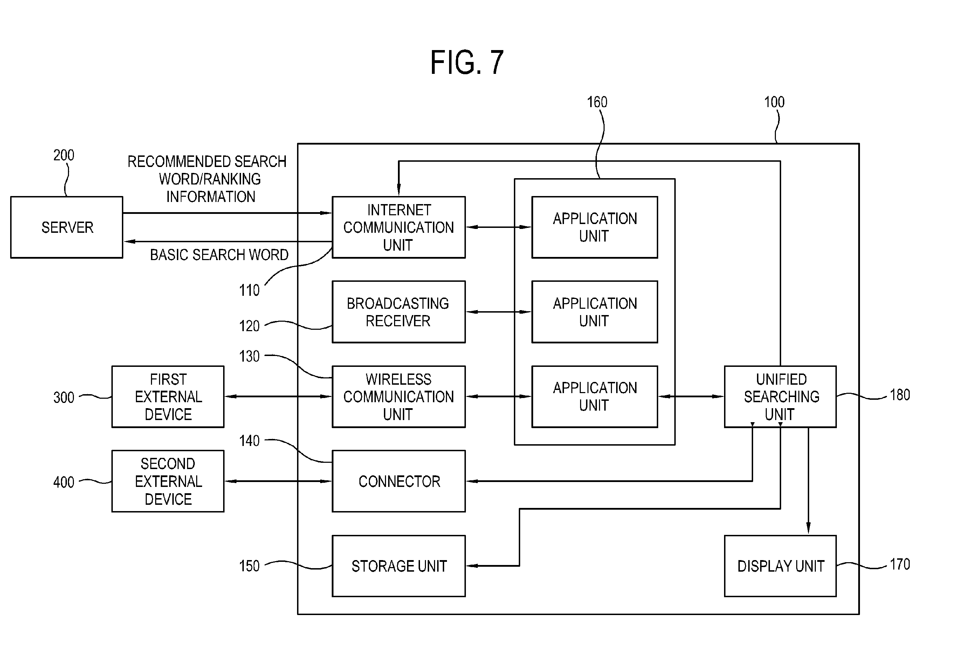

FIG. 7 is a control block diagram of a display apparatus according to still another exemplary embodiment.

As shown therein, the contents through the connector 140 and the contents stored in the storage unit 150 are searched by not the application unit 160 but the integrated searching unit 180. If a recommended search word is selected by a user, the integrated searching unit 180 refers to setup information (i.e., configuration) of the application unit 160 installed in the display apparatus 101 to thereby determine whether the searching function is supported, and controls the application unit 160 having the searching function to thereby command the application unit to search the contents with regard to the recommended search word. In response to the determination of whether the searching function is supported, the integrated searching unit 180 directly searches the contents with regard to the application program having no searching function, and displays it in the search list.

When the application unit 160 is newly installed, the integrated searching unit 180 may perform integrated searching on the basis of the setup information of the application unit 160. In the case of an application program provided by not the manufacturer of the display apparatus 100 but a third party, it may be programmed to be accessed by the integrated searching unit 180 and to display search results under control of the integrated searching unit 180.

The present exemplary embodiment is similar to the previous exemplary embodiments in that the basic search word is extracted and the recommended search words are received from the server and displayed.

As described above, the exemplary embodiments provide a display apparatus and a contents-searching method, which can provide a recommended search word related to contents being displayed,

Also, the exemplary embodiments provide a display apparatus and a contents-searching method, in which contents can be easily searched through a plurality of application units capable of providing contents.

Further, the exemplary embodiments provide a display apparatus and a contents-searching method, in which contents can be easily searched with regard to application units providing no searching function.

Although a few exemplary embodiments have been shown and described, it will be appreciated by those skilled in the art that changes may be made in these exemplary embodiments without departing from the principles and spirit of the inventive concept, the scope of which is defined in the appended claims and their equivalents.

## Claims

1. A display apparatus comprising
a display unit which displays current contents from among a plurality of contents; and
a integrated searching unit which displays at least one recommended search word related to the current contents displayed on the display unit if a user inputs a search signal for executing a searching function, and displays selected contents from among the plurality of contents, the selected contents related to the recommended search word, if a user selects the recommended search word.

2. The display apparatus according to claim 1, further comprising a plurality of application units searching and executing a plurality of contents,
wherein the integrated searching unit controls the plurality of application units to search the plurality of contents related to the recommended search word.

3. The display apparatus according to one of claims 1 and 2, further comprising a communication unit which communicates with an external server,
wherein the integrated searching unit extracts a basic search word based on metadata of the contents currently displayed on the display unit when the search signal is received, transmits the extracted basic search word to the external server, and receives the recommended search word related to the basis search word from the server, and displays the recommended search word.

4. The display apparatus according to one of claims 1 to 3, further comprising a broadcasting receiver which receives a broadcasting signal,
wherein the integrated searching unit receives and displays a program ranking information about the broadcasting signal from the server if the display unit displays the broadcasting signal.

5. The display apparatus according to one of claims 2 to 4, wherein the integrated searching unit receives from the server and displays a contents ranking information about an application unit that provides the contents currently displayed on the display unit.

6. The display apparatus according to one of claims 2 to 3, further comprising a broadcasting receiver which receives a broadcasting signal,
wherein the integrated searching unit receives a program ranking information and a contents ranking information about at least one of the application units from the server, and displays the program ranking information and the contents ranking information.

7. The display apparatus according to one of claims 1 to 6, wherein the integrated searching unit displays a search list from the searched contents on the display unit.

8. The display apparatus according to claim 7, wherein the integrated searching unit controls at least one of the application units to execute the selected contents if the selected contents from the search list is selected.

9. The display apparatus according to one of claims 2 to 8, wherein at least one of the application units receives contents from a predetermined contents provider based on Internet.

10. The display apparatus according to one of claims 2 to 9, further comprising a communication unit which performs network communication with an external device,
wherein at least one of the application units searches contents in the external device through the communication unit.

11. A method of searching a plurality of contents of a display apparatus comprising a plurality of application units and a display unit, the method comprising:
displaying current contents from among the plurality of contents on the display unit;
receiving a search signal from a user for executing a searching function;
displaying on the display unit at least one recommended search word related to the current contents displayed on the display unit;
receiving from the user a search word selection signal for selecting the recommended search word; and
displaying selected contents from among the plurality of contents related to the recommended search word if the user selects the recommended search word.

12. The method according to claim 11, further comprising searching the plurality of contents related to the selected recommended search word by controlling the plurality of applications unit.

13. The method according to one of claims 11 and 12, further comprising:
extracting a basic search word based on metadata of the current contents displayed on the display unit when the search signal is received;
transmitting the extracted basic search word to an external server; and
receiving the recommended search word related to the basic search word from the server.

14. The method according to one of claim 11 to 13, wherein the display apparatus further comprises a broadcasting receiver for receiving a broadcasting signal,
the method further comprising:
receiving a program ranking information about the broadcasting signal and a contents ranking information about the application unit from the server; and
displaying information related to the current contents displayed on the display unit between the program ranking information and the contents ranking information.

15. The method according to one of claim 11 to 14, wherein the displaying the selected contents comprises displaying a search list of the selected contents,
the method further comprising executing at least one of the selected contents if the one of the selected contents included in the search list is selected.
